# EUROPEAN PATENT APPLICATION

(11) **EP 3 103 608 A1**
(43) Date of publication of application: **14.12.2016**
(21) Application number: 15397527.1
(22) Date of filing: 09.06.2015
(51) Int. Cl.: B29B 17/02, D21B 1/32, B29K 105/26, B29K 311/12

(54) **DRUM REJECT**

(71) Applicant: UPM-Kymmene Corporation, 00100 Helsinki (FI)
(72) Inventor: Peltola, Piia, 13100 Hämeenlinna (FI); Clemens, Guido, 50354 Hûrth (DE); Jokinen, Mikko, 50354 Hûrth (DE); Männer, Philipp, 86163 Augsburg (DE); Mustonen, Kati, 53100 Lappeenranta (FI); Päiväläinen, Taru, 53100 Lappeenranta (FI)
(74) Representative: Tampereen Patenttitoimisto Oy

(57) **Abstract**

The present application relates to a sorted plastic fraction from sorted drum reject material obtained from production of recycled fiber, to a method for preparing composite material from said sorted plastic fraction, and to composite materials and products. The present application also relates to said sorted plastic fraction in form of granules.

## Description

### Field of the application

The present application relates to composite materials, products containing thereof and method for preparing said composite materials and products. More particularly the present application relates to composite materials and products containing a sorted plastics fraction from a drum reject material obtained from production of recycled fiber.

### Background

Plastic composite products typically comprise fiber material, such as organic fiber material, usually originating from wood, such as saw dust, and at least one kind of plastic polymer. The composite products may be used for several purposes, for example for furniture, deck floors, fences, window frames, and door frames.

### Summary

The recycled fiber (RCF) mill production in Europe generates a large amount of drum rejects per year. Plastics are one main fraction of these drum rejects. Other fractions like metal, wood or wet strengths papers, etc. have lower shares in the composition of drum rejects. Nowadays major quantity of the rejects will be burned for heat and energy production in boiler houses. Landfill of drum rejects is restricted or even forbidden in many countries of the EU.

The present application discloses the use of a plastics fraction separated from drum reject as a component of a composite material.

One embodiment provides a method for preparing composite material, the method comprising
- providing a sorted plastic fraction from drum reject material obtained from production of recycled fiber, the sorted plastic fraction comprising as dry weight
   - 0-30% (w/w) of cellulose-based material, and
   - 20-95% (w/w) of polyolefines,
- optionally providing additional thermoplastic polymers and/or fibers,
- forming a mixture comprising at least 10% (w/w) of thermoplastic polymer,
- heating the mixture above the melting temperature of the thermoplastic polymers and
- forming the heated mixture into composite material.

One embodiment provides a composite product containing the composite material obtained with said method.

One embodiment provides use of a sorted plastic fraction from drum reject material obtained from production of recycled fiber, in the manufacture of composite material, the sorted plastic fraction comprising as dry weight
- 0-30% (w/w) of cellulose-based material, and
- 20-95% (w/w) of polyolefines.

One embodiment provides a method for preparing granules, the method comprising
- obtaining a sorted plastic fraction from drum reject material obtained from production of recycled fiber, the sorted plastic fraction comprising as dry weight
   -0-30% (w/w) of cellulose-based material, and
   -20-95% (w/w) of polyolefines.
- refining the sorted plastic fraction, and
- forming the refined sorted plastic fraction into granules.

One embodiment provides a granule comprising sorted plastic fraction from drum reject material obtained from production of recycled fiber, the sorted plastic fraction comprising as dry weight
-0-30% (w/w) of cellulose-based material, and
-20-95% (w/w) of polyolefines.

The main embodiments are characterized in the independent claims. Various embodiments are disclosed in the dependent claims. The features recited in dependent claims and in the description are mutually freely combinable unless otherwise explicitly stated.

The collected waste material used as starting material is considered a material having value only as combustible matter. In the present methods and applications the inexpensive waste material is processed to obtain a raw material having more value and which may be used for preparing new materials, such as composite materials. The plastics and fibers contained in the waste material may be utilized in composite products to enhance the properties of the final products.

The paper and board residues in the starting material will enhance the mechanical strength, such as stiffness, of a composite product. Less new fibers need to be added for preparing the composite material.

The starting material contains remarkable amounts of plastics, generally polyolefines, such as polyethylene and polypropylene, which decrease the need for new thermoplastic polymers required in the manufacturing of the composite materials. In some cases there is no need to add any new thermoplastic material to prepare a composite product.

The sorted plastics fraction may contain substantially lower amount of inks when compared to other recycled materials. Therefore the sorted plastics fraction from drum reject material may be used for applications wherein water-soluble inks are not desired, for example composite products. Also the dyability of the composite material may be better and less dyes are needed.

The processed sorted plastics fraction is clean and no or only small amounts of odorants are required in the further applications of the material. The amount of biodegradable material is also low in the clean sorted plastics fraction, which further enhances the durability and structural properties of the material and the products obtained from the material.

As the starting material is obtained from a large process, the obtained sorted plastics fraction is of quite uniform quality. This is advantageous when preparing materials requiring high and uniform quality.

The sorted plastics fraction may be processed and provided as granules or pellets, which provide advantages in storage handling, transport and usage in the manufacturing processes of the final composite products. As the granules or pellets have been washed, there are no unpleasant odors and the material does not deteriorate easily. Such material may be stored for long times at regular storages at ambient temperatures.

### Description of the figures

- Figure 1: shows an overview of deinking rejects
- Figures 2a-2e: show examples of a two-layered product
- Figure 3: shows an example of an arrangement according to an embodiment
- Figure 4: shows an example of a method according to an embodiment in a reduced schematic chart

### Detailed description

The drum reject material is obtained from production of recycled fiber, or from sorting of recovered paper or board. The "production of recycled fiber" as used herein includes the sorting of recovered paper or board. In one embodiment the drum reject material is obtained from production of recycled fiber, or the drum reject material is obtained from recycled fiber. In one embodiment the drum reject material is obtained from production of recovered paper or board, or the drum reject material is obtained from recovered paper or board.

In one embodiment the recycled fiber comprises recovered paper or board comprising collected paper and/or cardboard waste.

Recycled fiber may be used as a raw material in the applications described in the present application. In one example the recycled fiber may be divided into two main categories:

Pre-consumer paper for recycling (PFR) refers to paper or board residues collected from converters, printers, distributors and transportation organizations before using the paper or board for its intended end use.

Post-consumer paper for recycling includes paper or board consumed by various end users collected from household, offices, retail trade etc.

The recovered paper or board may refer to recovered and/or collected paper or board, which may be divided into groups A and B according to European standard qualities:

Group A (Ordinary qualities) include unsorted mixed waste paper (A0), mixed papers and boards (A1), sorted mixed papers and boards (A2), board cuttings (A3), supermarket waste (A4), corrupted container waste (A5), new shavings of corrugated board (A6), overissue pamphlets and magazines (A7), overissue pamphlets and magazines free from adhesive bindings (A8), mixed news and bindings (A9), news and pamphlets free from adhesive bindings (A10), and mixeds pamphlets and magazines (A11).

Group B (Medium quality) includes once-read news (B1), overissue news (B2), white lined board cuttings (B3), mixed colored shavings (B4), bookbinders shavings (B5), bookbinders shavings without adhesives (B6), colored letters (B7), white woodfree books (B8), bookquire (B9), colored best pamphlets (B10), white carbonless copy papers (B11), colored carbonless copy papers (B12), and coated board (B13).

Paper for recycling may be divided into several categories. According to EN-643 five groups of grades belong to the following broad categories of waste paper.

Group 1 - Ordinary grades. Also known as brown, corrugated, low or ordinary qualities, are the grades of waste paper generated in largest amounts in Europe, covering ca. 50% of the flows, and stem from collection in commerce and households.

1.01 Mixed paper and board, unsorted, but unusable materials removed. A mixture of various grades of paper and board, without restriction on short fiber content. 1.02 Mixed papers and boards (sorted). A mixture of various qualities of paper and board, containing a maximum of 40% of newspapers and magazines. 1.03 Grey board: Printed and unprinted white lined and unlined grey board or mixed board, free from corrugated material. 1.04 Supermarket corrugated paper and board: Used paper and board packaging, containing a minimum of 70% of corrugated board, the rest being solid board and wrapping papers. 1.05 Old corrugated containers: Used boxes and sheets of corrugated board of various qualities. 1.06 Unsold magazines: Unsold magazines, with or without glue. 1.06.01 Unsold magazines without glue 1.07 Telephone books: New and used telephone books, with unlimited content of pages colored in the mass, with and without glue. Shavings allowed. 1.08 Mixed newspapers and magazines 1: A mixture of newspapers and magazines, containing a minimum of 50% of newspapers, with or without glue. 1.09 Mixed newspapers and magazines 2: A mixture of newspapers and magazines, containing a minimum of 60% of newspapers, with or without glue. 1.10 Mixed magazines and newspapers: A mixture of newspapers and magazines, containing a minimum of 60% of magazines, with or without glue. 1.11 Sorted graphic paper for deinking: Sorted graphic paper from households, newspapers and magazines, each at a minimum of 40%.

Group 2 - Medium grades. Also known as gray, news, graphics, or middle qualities.

2.01 Newspapers: Newspapers, containing a maximum of 5% of newspapers or advertisements colored in the mass. 2.02 Unsold newspapers: Unsold daily newspapers, free from additional inserts or illustrated material colored in the mass. 2.02.01 Unsold newspapers, no flexographic printing allowed: Unsold daily newspapers, free from additional inserts or illustrated material colored in the mass, strings allowed. No flexographic printed material allowed. 2.03 Lightly printed white shavings, mainly mechanical pulp-based paper. 2.03.01 Lightly printed white shavings, mainly mechanical pulp-based paper, without glue. 2.04 Heavily printed white shavings, mainly mechanical pulp-based paper. 2.04.01 Heavily printed white shavings, mainly mechanical pulp-based paper, without glue. 2.05 Sorted office paper. 2.06 Colored letters: Correspondence, in mixed papers colored in the mass, with or without print, of printing or writing paper. Free from carbon paper and hard covers. 2.07 White woodfree books: Books, including misprints of books, without hard covers, mainly of woodfree white paper, black printed only. Containing a maximum of 10% of coated paper. 2.08 Colored woodfree magazines: Coated or uncoated magazines, white or colored in the mass free from non-flexible covers, bindings, non-dispersible inks and adhesives, poster papers, labels or label trim. May include heavily printed circulars and colored in the mass shavings. Containing a maximum of 10% mechanical pulp-based papers. 2.09 Carbonless copy paper. 2.10 Bleached woodfree PE-coated board from board manufacturers and converters. 2.11 Other PE-coated board. May contain unbleached board and paper from board manufacturers and converters. 2.12 Mechanical pulp-based computer print-out: Continuous computer print-out, mechanical pulp-based, sorted by colours, may include recycled fibers.

Group 3 - High grades (Pulp substitutes): Also called white or high qualities, are used in papermaking receipts together with virgin pulp to improve the quality of recycled printing products.

3.01 Mixed lightly colored printer shavings: Mixed shavings of printing and writing papers, lightly colored in the mass, containing a minimum of 50% of woodfree paper. 3.02 Mixed lightly colored woodfree printer shavings: Mixed shavings of printing and writing papers, lightly colored in the mass, containing a minimum of 90% of woodfree paper. 3.03 Woodfree binders: White woodfree lightly printed shavings with glue, free from paper colored in the mass. May contain a maximum of 10% of mechanical pulp-based paper. 3.04 Tear white shavings: White woodfree lightly printed shavings without glue, free from wet-strength paper and paper colored in the mass. 3.05 White woodfree letters: Sorted white woodfree writing papers, originating from office records, free from cash books, carbon paper and non-water soluble adhesives. 3.06 White business forms: White woodfree printed business forms. 3.07 White woodfree computer print-out, free from carbonless paper and glue. 3.08 Printed bleached sulphate board: Heavily printed sheets of bleached sulphate board, without glue, polycoated or waxed materials. 3.09 Lightly printed bleached sulphate board: Lightly printed sheets of bleached sulphate board, without glue, polycoated or waxed materials. 3.10 Multi printing: Woodfree, coated, lightly printed, free from wet-strength paper or paper colored in the mass. 3.11 White heavily printed multiply board: New cuttings of heavily printed white multiply board, containing woodfree, mechanical or thermo-mechanical pulp plies, but without grey plies. 3.12 White lightly printed multiply board: New cuttings of lightly printed white multiply board, containing woodfree, mechanical or thermo-mechanical pulp plies, but without grey plies. 3.13 White unprinted multiply board: New cuttings of unprinted white multiply board, containing woodfree, mechanical or thermo-mechanical pulp plies, but without grey plies. 3.14 White newsprint: Shavings and sheets of white unprinted newsprint, free from magazine paper. 3.15 White mechanical pulp-based coated and uncoated paper: Shavings and sheets of white unprinted coated and uncoated mechanical pulp-based paper. 3.15.01 White mechanical pulp-based paper containing coated paper: Shavings and sheets of white unprinted mechanical pulp-based coated paper. 3.16 White woodfree coated paper, without glue: Shavings and sheets of white unprinted woodfree coated paper, without glue. 3.17 White shavings: Shavings and sheets of white unprinted paper, free from newsprint and magazine paper containing a minimum of 60% of woodfree paper; may contain a maximum of 10% of coated paper. Without glue. 3.18 White woodfree shavings:

Shavings and sheets of white unprinted woodfree paper, may contain a maximum of 5% of coated paper. Without glue. 3.18.01 White woodfree uncoated shavings: Shavings and sheets of white unprinted woodfree paper, free from coated paper. Without glue. 3.19 Unprinted sheets of bleached sulphate board, without glue, polycoated or waxed materials.

Group 4 - Kraft grades. Also high-quality paper (mostly non-deinked cardboard) types containing sulphate fibers (kraft).

4.01 New shavings of corrugated board: Shavings of corrugated board, with liners of kraft or testliner. 4.01.01 Unused corrugated kraft: Unused boxes, sheets and shavings of corrugated board, with kraft liners only, the fluting made from chemical or thermochemical pulp. 4.01.02 Unused corrugated material: Unused boxes, sheets and shavings of corrugated board, with liners of kraft or testliner. 4.02 Used corrugated kraft 1: Used boxes of corrugated board, with kraft liners only, the fluting made from chemical or thermo-chemical pulp. 4.03 Used corrugated kraft 2: Used boxes of corrugated board, with liners of kraft or testliners but having at least one liner made of kraft. 4.04 Used kraft sacks: Clean used kraft sacks. Wet-strength and non wet-strength. 4.04.01 Used kraft sacks with polycoated papers: Clean used kraft sacks. Wet-strength and non wet-strength. May include polycoated papers. 4.05 Unused kraft sacks: Wet-strength and non wet-strength.4.05.01 Unused kraft sacks with polycoated papers: Wet-strength and non wet-strength, may include polycoated papers. 4.06 Used kraft: Used kraft paper and board of a natural or white shade. 4.07 New kraft: Shavings and other new kraft paper and board of a natural shade. 4.08 New carrier kraft, may include wet-strength paper.

Group 5 of 'special grades' was created to take into account developments in new paper products that were increasingly collected, for example from households requiring specific recycling processes. Group 5 contains two grades that can exceed the 1.5% maximum tolerance level for non-paper components:

5.01 Mixed recovered paper and board: Unsorted paper and board, separated at source. 5.02 Mixed packaging: A mixture of various qualities of used paper and board packaging, free from newspapers and magazines. 5.03 Liquid board packaging: Used liquid packaging board including used PE-coated liquid packaging board (with or without aluminium content), containing a minimum of 50% by weight of fibers, and the balance being aluminium or coatings. 5.04 Wrapper kraft: Poly-lined, sprayed, or laminated used kraft. Must not contain bitumen or wax coatings. 5.05 Wet labels: Used wet labels from wet- strength papers, containing a maximum of 1% glass content, and a maximum of 50% moisture, without other unusable materials. 5.06 Unprinted white wet-strength woodfree papers. 5.07 Printed white wet-strength woodfree papers.

Other grades include unused beverage cartons, labels, colored wet-strength, new grades, grades containing plastic layers and carbonless copypaper moved to Group 5. Examples of the latter grades include: clean used kraft sacks (5.12.00). May be printed or unprinted or may be wet strength or non wet-strength. May include plastic layer papers; and used kraft sacks with plastic layer papers (5.12.01). Clean used kraft sacks with plastic layer. May be printed or unprinted and may contain wet-strength or non wet-strength plies. Unused kraft sacks (5.13.00). May be printed or unprinted and may be wet-strength or non wet-strength, and may also include papers with a plastic layer. Unused kraft sacks with plastic layer papers and polyliners (5.13.01). May be printed or unprinted and may contain wet-strength or non-wet-strength plies.

Any of the above-mentioned materials or material groups, or combinations thereof, may be used as a starting material in the methods described herein. In one embodiment the starting material contains Group 5 material. In one embodiment the starting material contains Group 1 material. In one embodiment the starting material contains Group 2 material. Also mixtures thereof may be used. In one example the starting material contains at least Group 1.06 material (Unsold magazines without glue). In one example the starting material contains at least Group 1.11 material (Sorted graphic paper for deinking: Sorted graphic paper from households, newspapers and magazines, each at a minimum of 40%). In one example the starting material contains at least Group 2.01 material (Newspapers: Newspapers, containing a maximum of 5% of newspapers or advertisements colored in the mass). In one example the starting material contains at least Group 2.03 material (Lightly printed white shavings, mainly mechanical pulp-based paper).

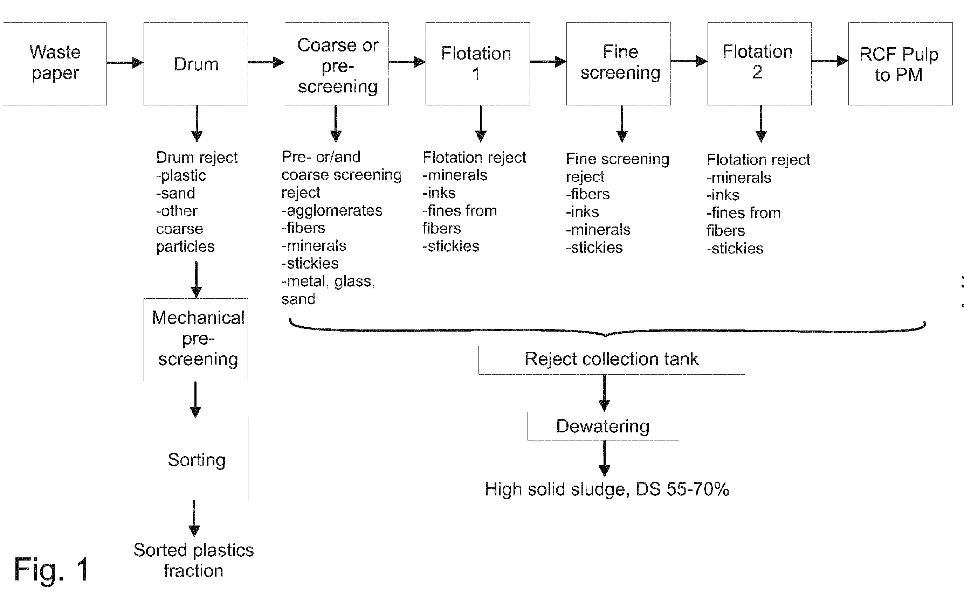

In general the recovered paper or board is fed to a rotating drum, wherein it is separated from unwanted materials in the first step of RCF process. The drum may be called a pulper drum. An accepted fraction proceeds through the slots in the drum to coarse and/or pre-screening, and the rejected fraction settles down and forms the drum reject. The accepted fraction from the screening proceeds further to first flotation, fine screening, and to a second flotation, and finally a RCF pulp is formed. The drum reject is formed when the collected paper or board is disintegrated. Figure 1 shows an overview of the process. In the first step plastics, sand and other coarse particles are separated from the drum as drum rejects. This plastic fraction is used to prepare the raw material for the composite products.

In one example a twin drum concept is used comprising two drums, one for pulping and one for screening. In a conventional drum pulper the slushing is achieved by carrying the stock upwards and letting it fall down in a relatively high speed rotating drum. A twin drum pulper comprises a drum rotating around a D-shaped stationary displacement core. The drum and displacement core walls form a semi-annular channel in which the furnish is carried upwards from the collection zone at the bottom of the pulper. Shear forces in this displacement channel generate intensive fiber to fiber friction, ensuring effective kneading and slushing of the furnish. The furnish then drops over the top edge of the displacement core and back down into the collection zone. Here, the large available volume provides a sufficiently long dwelltime. This ensures complete wetting down and swelling of the furnish, which provides advantageous conditions for facilitating the pulping process. This continuous wetting, softening, kneading and fiber to fiber friction process at consistencies up to 26% bone dry along the length of the drum ensures gentle, yet efficient pulping of the recovered paper, without breaking down the non-paper components, such as plastic foils, stickies, etc.

In general drum rejects are the rejects coming out from the drum pulper. Normally they are pressed to reduce the moisture content before incineration or disposal. In one example they are not pressed, whereas the non-pressed drum rejects, which may contain water in the range of 30-70%, for example in the range of 50-60%, are processed according to the following sorting process:
- mechanical pre-screening to remove the fine fraction, followed by
- sorting of the pre-screened drum rejects.

A large amount of fibrous material and water is removed in the mechanical pre-screening step. In one example the mechanical screening is carried out with a drum screen. In one example the mechanical screening is carried out with a vibrating screen. In one example the mechanical screening is carried out with a flip flow screen.

The drum reject material is sorted to obtain the sorted plastic fraction. The sorting may be carried out with any suitable sorting equipment or device, which may be partly or fully automated. In one example the sorting is carried out with a multifunctional sorting system which is arranged to recover a range of pieces of material from starting material, such as different waste streams, single stream, packaging, paper, household waste or other sorting tasks, and/or which is arranged to discard certain pieces or fractions. Mechanical or optical separation techniques or combinations thereof may be used in the sorting. The sorting device may include one or more sensors or scanners, such as electromagnetic sensors, spectrometric scanners and the like, for example NIR or VIS sensors, which may for example be used to recognize print media by CMYK spectral analysis. In one example the sorting is NIR-based sorting. In the sorting plastics are separated from other material. Different types of plastics may be sorted into separate fractions, or they may be kept in one plastics fraction. A plastics fraction may be used for preparing composite materials, or a fraction comprising certain type of plastic may be discarded, for example PVC-containing fraction, in which case two or more of the other fractions may be combined and used for preparing the composite material.

In one embodiment first the polyethylene (PE) is sorted out from the pre-screened drum rejects. Then the separated polyethylene fraction may be cleaned by running it again through a sorting system. In other embodiments all the different plastic fractions are sorted out in the same way, such as polypropylene, polycarbonate, PVC etc. In one embodiment the polypropylene (PP) is sorted out from the pre-screened drum rejects. In one embodiment the method further contains a treatment of the plastics, such as drying, crushing, and/or granulating. The moisture content of an obtained plastic fraction is generally in the range of 20-25% (w/w).

The plastics are separated from the drum rejects and may be used as the starting material for the methods and products described herein. However, it may be desired not to use PVC in the production of the composite materials. In one embodiment the sorted plastic fraction does not contain PVC fraction, or a sorted PVC fraction is not included in the starting material. This reduces the amount of chlorine in the process and in the composite materials. The separated plastics may contain an amount of cellulose originating mainly from papers or boards, and small amounts of other impurities. The separated plastics fraction contains about 20% of water, and the fraction is dewatered or dried to a water content of about 5% (w/w) or less, such as 1-5% (w/w), or 1-3% (w/w). In one example the water content is less than 3% (w/w), or less than 1% (w/w).

The sorted plastic fraction comprises 0-30% (w/w) of cellulose-based material, such as fibers, and 20-95% (w/w) of plastics, more particularly thermoplastic polymers, such as polyolefines. In one embodiment the polyolefines comprise at least polyethylene. In one embodiment the polyolefines comprise at least polypropylene. In one embodiment the polyolefines comprise at least polyethylene and polypropylene. In one embodiment said polyolefines consist of polyethylene and polypropylene. In one embodiment the sorted plastic fraction comprises 1-30% (w/w) of cellulose-based material. In one embodiment the sorted plastic fraction comprises 1-20% (w/w) of cellulose-based material. In one embodiment the sorted plastic fraction comprises 1-10% (w/w) of cellulose-based material. In one embodiment the sorted plastic fraction comprises 1-5% (w/w) of cellulose-based material. In one embodiment the sorted plastic fraction comprises 5-20% (w/w) of cellulose-based material. In one embodiment the sorted plastic fraction comprises 10-20% (w/w) of cellulose-based material. In one embodiment the sorted plastic fraction comprises 5-12% (w/w) of cellulose-based material.

The percentages of ingredients disclosed herein refer to dry weights (w/w) unless otherwise indicated.

In one embodiment the sorted plastic fraction comprises 1-10% (w/w) of cellulose-based material and 20-95% (w/w) of thermoplastic polymers. In one embodiment the sorted plastic fraction comprises 1-10% (w/w) of cellulose-based material and 20-95% (w/w) of polyolefines. In one embodiment the sorted plastic fraction comprises 5-20% (w/w) of cellulose-based material and 20-95% (w/w) of polyolefines. In one embodiment the sorted plastic fraction comprises 5-20% (w/w) of cellulose-based material and 80-95% (w/w) of polyolefines. In one embodiment the sorted plastic fraction comprises 1-10% (w/w) of cellulose-based material and 80-95% (w/w) of polyolefines.

The "cellulose-based material" as used herein refers to paper and board based material included in the sorted plastics fraction.

In one embodiment the separated plastics fraction contains less than 1% of fines, such as less than 0.5% (w/w), or less than 0.1 % (w/w).

In one embodiment the separated plastics fraction comprises less than 1%, such as less than 0.5% (w/w), or less than 0.1% (w/w) of water-soluble inks. However, other colored compounds may be present, such as colored plastics, and for example hydrophobic inks even tend to concentrate on the surfaces of the plastic films.

In one embodiment the chlorine content of the sorted plastics fraction is less than 1% (w/w), such as less than 0.5% (w/w), or less than 0.2% (w/w), or 0%. The chlorine may be originated for example from PVC. For example in the tests the chlorine content of a PE fraction after the second sorting round was generally about 0.4% (w/w).

In one embodiment recovered paper or board is collected paper and/or cardboard. In one embodiment the collected paper and/or cardboard comprises domestic waste, either completely or partially. Domestic waste may also be called household waste or residential waste. In one example at least 50% (w/w) of the collected paper and/or cardboard is domestic waste. In one example at least 80% (w/w) of the collected paper and/or cardboard is domestic waste. In one example at least 90% (w/w) of the collected paper and/or cardboard is domestic waste. In one example 100% (w/w) of the collected paper and/or cardboard is domestic waste. As in the collected waste in general, especially in the collected domestic paper and/or cardboard waste the sorting errors are common, and the collected paper or board may also contain material which does not belong there, for example garbage and rubbish, such as plastics, metals, wood, textiles, compost, yard trimmings, food scraps and the like. Also regular domestic waste may be erroneously mixed with the paper or board waste.

Food remains are common, originating for example from food packages, such as processed food packages, or caused by sorting errors. The food remains and other organic material, in general biodegradable contaminants, contained in the drum reject are easily perished thus resulting in microbial growth. This causes problems for example with smell, which limits the use of the drum reject derived material. It would be possible to hide some of the unpleasant odors of such material with odorants, but this would in turn results in a strong smell of odorants in the final product. The storage and handling of such deteriorating material is difficult.

In one embodiment the obtained separated plastics fraction is washed at a temperature of 60-90°C prior to further use, for example prior to forming any intermediate products such as granules or composite materials, or prior to forming final products, such as composite products. After the washing at an elevated temperature the water content of the plastics fraction is usually reduced, and may be less than 5%, less than 3%, or less than 1%, for example about 1-5%, or 1-3%, or 1-2% (w/w).

The separated plastics fraction may be refined to obtain smaller particles. For example a plastics fraction having a size, meaning the largest dimension or diameter, of few centimeters, for example about five centimeters in average, may be refined prior to forming the composite material, and it is in a refined form having an average particle size in the range of 5-20 mm, such as 10-20 mm (the largest diameter), or further even about 5 mm.

### Granulated plastics fraction

In one embodiment the separated plastics fraction is in form of granules or small pellets. As used herein the word "granule" should be understood as also including pellets of any shape, such as spherical, oval, elongated, block-like or other suitable shapes. Granules are easy to store, handle and transport. The homogeneity of the material is high in granules. Also in the manufacturing process of composite material the granules provide accurate and fluent feeding of the material. Some devices used in the manufacturing process, such as extruders, may require the use of granules. In some cases granules may be melted easier, and the mixability of the granules to the other materials may be better. In one example a granule is prepared by melting the thermoplastic polymers in the raw material, for example by using an extruder. In one example a pellet is prepared by compressing the raw material, for example through a hole.

One embodiment provides a method for preparing granules, the method comprising
- obtaining a sorted plastic fraction from drum reject material obtained from production of recycled fiber, the sorted plastic fraction comprising as dry weight
   -0-30% (w/w) of cellulose-based material, and
   -20-95% (w/w) of polyolefines.
- refining the sorted plastic fraction, and
- forming the refined sorted plastic fraction into granules.

In one embodiment the method comprises washing the plastic fraction at a temperature of 60-90°C. Generally the washing is carried out in an aqueous solution. Also detergents or alkaline solution may be used. The washing may be carried out at a temperature in the range of 65-85°C, or preferably at temperatures above 77°C in aqueous solution. In one example the washing temperature is 65-75°C, or even higher such as about 80°C. In one example the washing liquid comprises caustic soda, for example sodium hydroxide. The washing liquid may be 2-4%, preferably 2% alkaline water. In one embodiment the washing is carried out before the refining step. In one embodiment the washing is carried out after the refining step. In one embodiment the washing is carried out before the granulating step. In one embodiment the washing is carried out after the granulating step.

In the wash the amount of contaminants, especially biodegradable contaminants or organic material, is reduced. After washing the granule contains less than 1% (w/w), or less than 0.5% (w/w), or even less than 0.1 % (w/w) of biodegradable or organic contaminants.

One embodiment provides a granule comprising sorted plastic fraction from drum reject material obtained from production of recycled fiber, the sorted plastic fraction comprising as dry weight
-0-30% (w/w) of cellulose-based material, and
-20-95% (w/w) of polyolefines.

The size of the granules may be adjusted. The desired size of the granule may depend on the machine used, or the desired properties of the material, such as flowability. In one embodiment the mean average diameter of the granules is in the range of 2-7 mm, such as 3-6 mm. The dimensions disclosed herein may be determined by any regular measurement method known in the art.

In one embodiment the water content of the granule is less than 5% (w/w). In one embodiment the water content of the granule is less than 3% (w/w). In one embodiment the water content of the granule is less than 1 % (w/w).

The obtained sorted plastic fraction from drum reject material, granulated or not granulated, is usually dried before it is used for the preparation of the composite material. In one embodiment the sorted plastic fraction from drum reject material is dried to a dry content of less than 5% (w/w). In one embodiment the sorted plastic fraction from drum reject material is dried to a dry content of less than 3% (w/w). In one embodiment the sorted plastic fraction from drum reject material is dried to a dry content of less than 1 % (w/w).

### Composite material

The obtained drum reject material may be used for preparing composite materials, and further composite products produced from said composite materials. The composite material may be prepared from the obtained drum reject material as such, or from granulated drum reject material. The composite material may be provided as non-foamed or foamed in the final products. A cellulose-containing composite material may be called natural fiber composite material. "Fiber" as used herein may refer to one or more types of fibers from one or more sources. In one embodiment the fibers are natural fibers.

One embodiment provides use of a sorted plastic fraction from drum reject material obtained from production of recycled fiber, in the manufacture of composite material, the sorted plastic fraction comprising as dry weight
-0-30% (w/w) of cellulose-based material, and
-20-95% (w/w) of polyolefines.

One embodiment provides a method for preparing composite material, the method comprising
- providing a sorted plastic fraction from drum reject material obtained from production of recycled fiber, the sorted plastic fraction comprising as dry weight
   -0-30% (w/w) of cellulose-based material, and
   -20-95% (w/w) of thermoplastic polymers comprising polyolefines,
- optionally providing additional thermoplastic polymer and/or fibers,
- forming a mixture comprising at least 10% (w/w) of thermoplastic polymer,
- heating the mixture above the melting temperature of the thermoplastic polymer and
- forming the heated mixture into composite material.

The thermoplastic polymer which may be provided optionally refers to additional thermoplastic polymer(s) not originated from the sorted plastic fraction. Such additional thermoplastic polymer may be added for example if the polymer content of the sorted plastic fraction is not high enough for the desired composition of the composite material, or if supplemental polymers not present in the sorted plastic fraction are required for the desired composition of the composite material. The total amount of thermoplastic polymer(s) in the mixture, or in the final composite product, as dry weight, may be at least 10% (w/w), at least 20% (w/w), at least 30% (w/w), at least 40% (w/w), at least 50% (w/w), at least 60% (w/w), at least 70% (w/w) or at least 80% (w/w).

One embodiment provides a method for preparing composite material, the method comprising providing a sorted plastic fraction, forming a mixture comprising at least 10% (w/w) of thermoplastic polymer, and forming the mixture into a composite material.

In one embodiment the mixture comprises at least 40% (w/w) of thermoplastic polymer and fibers. In one embodiment the mixture comprises at least 50% (w/w) of thermoplastic polymer and fibers. In one embodiment the mixture comprises at least 60% (w/w) of thermoplastic polymer and fibers. In one embodiment the mixture comprises at least 70% (w/w) of thermoplastic polymer and fibers. In one embodiment the mixture comprises thermoplastic polymer and fibers up to 80% (w/w). The content of filler may be up to 20%, such as at least 5%, at least 10%, at least 15%, or at least 20% (w/w). The thermoplastic polymers may comprise added thermoplastic polymers, which may be virgin or recycled. The fibers may comprise added fibers, which may be virgin (new) or recycled.

One embodiment provides a method for preparing composite material, the method comprising
- providing a sorted plastic fraction from drum reject material obtained from production of recycled fiber, the sorted plastic fraction comprising as dry weight
   - 0-30% (w/w) of cellulose-based material, and
   - 20-95% (w/w) of polyolefines,
- optionally providing additional thermoplastic polymer(s) and/or fibers,
- forming a mixture comprising at least 20% (w/w) of thermoplastic polymers and at least 10% of fibers,
- heating the mixture above the melting temperature of the thermoplastic polymer(s) and
- forming the heated mixture into composite material.

In one embodiment said mixture comprises 20-80% (w/w) of thermoplastic polymer and 10-80% (w/w) of fibers. In one embodiment said mixture comprises 20-80% (w/w) of thermoplastic polymer and 10-60% (w/w) of fibers. In one embodiment said mixture comprises 20-40% (w/w) of thermoplastic polymer and 10-80% (w/w) of fibers. In one embodiment said mixture comprises 20-40% (w/w) of thermoplastic polymer and 10-60% (w/w) of fibers. In one embodiment all the thermoplastic polymers are polyolefines, such as polyethylene and/or polypropylene. The amount of fibers may be adjusted according to the type and purpose of the final composite product. For example it may be desired to use less fiber in a foamed product. In one embodiment the fibers are natural fibers. In one embodiment the fibers are organic natural fibers, such as cellulose fibers. Cellulose fibers may be originated partly or completely from the cellulose-based material of the sorted plastic fraction. The mixture may also comprise 0-15% (w/w) of filler, for example 5-15% (w/w) or 5-10% (w/w), and/or 1-5% (w/w) of other additives.

In one embodiment said mixture comprises about 20% (w/w) of thermoplastic polymers and about 60% (w/w) of fibers. In one embodiment said mixture comprises about 30% (w/w) of thermoplastic polymers and about 50% (w/w) of fibers. In one embodiment said mixture comprises about 40% (w/w) of thermoplastic polymers and about 40% (w/w) of fibers. In one embodiment said mixture comprises about 50% (w/w) of thermoplastic polymers and about 30% (w/w) of fibers. In one embodiment said mixture comprises about 60% (w/w) of thermoplastic polymers and about 20% (w/w) of fibers. In one embodiment said mixture comprises about 70% (w/w) of thermoplastic polymers and about 10% (w/w) of fibers.

The contents described above for the mixture also apply for the final composite product.

The methods for preparing composite materials may further include adding any further ingredients to the mixture or to form a mixture, for example additional thermoplastic polymers, fibers, fillers, lubricants, coupling agents, colorants, odorants or odor reducers, stabilizers, or other additives.

In general 5-100% (w/w), as dry weight, of all the thermoplastic polymers in the mixture or in the final composite may be from the sorted plastic fraction, for example 50-100% (w/w), 60-100% (w/w), 70-100% (w/w), 80-100% (w/w) or 90-100% (w/w). Therefore in one example no additional thermoplastic polymer is added but all the thermoplastic polymers are originated from the sorted plastic fraction. In one example 100% (w/w) of thermoplastic polymers in the mixture or in the composite is from the sorted plastic fraction. In one example the 95-99% (w/w) of thermoplastic polymers in the mixture or in the composite is from the sorted plastic fraction. "Composite" as used herein may refer to the composite material or to the composite product produced from said composite material. "Mixture" refers to the mixture formed during the preparation process of the composite.

In one embodiment the composite contains sorted plastic fraction in an amount in the range of 5-95% (w/w), for example 10-90% (w/w), 20-90% (w/w), 30-90% (w/w) or 40-90% (w/w) of all the thermoplastic polymers. In one embodiment the composite contains sorted plastic fraction in an amount in the range of 50-100% (w/w), for example 60-100% (w/w), 70-100% (w/w), 80-100% (w/w) or 90-100% (w/w) of all the thermoplastic polymers. In one embodiment the composite contains sorted plastic fraction in an amount in the range of 30-80% (w/w) of all the thermoplastic polymers. In one embodiment the composite contains sorted plastic fraction in an amount in the range of 50-70% (w/w) of all the thermoplastic polymers.

In one embodiment the composite contains thermoplastic polymer in an amount in the range of 20-80% (w/w). In one embodiment the composite contains thermoplastic polymer in an amount in the range of 30-70% (w/w). In one embodiment the composite contains thermoplastic polymer in an amount in the range of 30-60% (w/w). In one embodiment the composite contains thermoplastic polymer in an amount in the range of 30-45% (w/w). In one embodiment the composite contains thermoplastic polymer in an amount in the range of 40-60% (w/w). Said thermoplastic polymer may be completely or partially originated from the sorted plastic fraction. In some cases the aim is to use substantially low amount of plastics in the composite. In such a case the composite may contain thermoplastic polymer in an amount in the range of 20-40% (w/w), for example about 20% (w/w), about 25% (w/w), about 30% (w/w), about 35% (w/w) or about 40% (w/w).

In one embodiment the composite contains additional thermoplastic polymer in an amount in the range of 5-50% (w/w) and sorted plastic fraction in the range of in the range of 50-95% (w/w) of total polymers. In one embodiment the composite contains additional thermoplastic polymer in an amount in the range of 5-30% (w/w) and sorted plastic fraction in the range of in the range of 70-95% (w/w) of total polymers. In one embodiment the composite contains additional thermoplastic polymer in an amount in the range of 20-70% (w/w) and sorted plastic fraction in the range of in the range of 30-80% (w/w) of total polymers. In one embodiment the composite contains additional thermoplastic polymer in an amount in the range of 30-45% and sorted plastic fraction in the range of in the range of 55-70% (w/w) of total polymers. Examples of the amounts of the sorted plastic fraction in the dry weight of total polymers in the composite include about 30% (w/w), about 40% (w/w), about 50% (w/w), about 60% (w/w), about 70% (w/w), about 80% (w/w), about 90% (w/w), about 95% (w/w) and about 100% (w/w).

The composite contains at least one thermoplastic polymer or plastic. A "thermoplastic polymer" as used herein may refer to one or more thermoplastic polymers. A thermoplastic is a plastic which becomes pliable or moldable above a specific temperature and returns to a solid state upon cooling. Examples of thermoplastic polymers include poly(methyl methacrylate), polyamide (Nylon), polyethylene, polypropylene, polystyrene, polyvinyl chloride, polytetrafluoride (Teflon), polyethylene terephthalate and mixtures thereof.

Thermoplastic polymer may be a thermoplastic polyolefin, or a mixture thereof, or a mixture of polyolefin and another thermoplastic polymer, or a polymer derived from a thermoplastic polymer, or a copolymer of two or more thermoplastic polymers. Examples of thermoplastic polyolefines include polyethylene, polypropylene, polymethylpentene, and polybutene-1, and mixtures and copolymers thereof. In one embodiment the thermoplastic polymer comprises or consists of polyolefin, such as polypropylene (PP) or polyethylene (PE). In one embodiment the thermoplastic polymer comprises one or more polyolefin(s), such as polyethylene and/or polypropylene. In one embodiment the thermoplastic polymer is polyolefin.

The temperature in general used for melting the thermoplastic polymers may be for example in the range of 150-360°C, such as 180-360°C. When using high temperatures, such as over 200°C or over 220°C, polymers such as polystyrene, polyamide, polytetrafluoride, polyethylene terephthalate (PET), poly(methyl methacrylate) and polycarbonate (PC) may be used. These materials have a high melting point and therefore the obtained products will also tolerate high temperatures. In one embodiment the composite comprises one or more thermoplastic polymer(s), such as one or more additional thermoplastic polymer(s), selected from polystyrene, polyamide, polytetrafluoride, polyethylene terephthalate and polycarbonate. At lower temperatures such as below 200°C, below 180°C or below 160°C, also polyolefines may be used. With polyolefines temperatures for example in the range of 100-200°C may be used. In one embodiment the temperature is in the range of 100-200°C. In one embodiment the temperature is in the range of 120-200°C. In one embodiment the temperature is in the range of 130-190°C. In one embodiment the temperature is in the range of 140-190°C. In one embodiment the temperature is in the range of 120-220°C. In one embodiment the temperature is in the range of 120-200°C.

Polypropylene is a thermoplastic partly crystalline polymer. It has a glass transition temperature around 0°C. Copolymers can be formed by adding for example polyethylene to polypropylene. Glass transition of copolymers is below 0°C. Examples of suitable polypropylenes or polymers derived from polypropylene include PP-homopolymers, random PP copolymers, PP block copolymers, PP terpolymers, PP elastomers and PP plastomers. The melt temperature of polypropylene is around 160°C.

Polyethylene is a thermoplastic polymer which may be classified into several different categories based on density and branching. Examples of such categories include ultra-high-molecular-weight polyethylene (UHMWPE), ultra-low-molecular-weight polyethylene (ULMWPE or PE-WAX), high-molecular-weight polyethylene (HMWPE), high-density polyethylene (HDPE), high-density cross-linked polyethylene (HDXLPE), cross-linked polyethylene (PEX or XLPE), medium-density polyethylene (MDPE), linear low-density polyethylene (LLDPE), low-density polyethylene (LDPE), very-low-density polyethylene (VLDPE) and chlorinated polyethylene (CPE). The melting point and glass transition temperature may vary depending on the type of polyethylene. For medium and high-density polyethylene the melting point is typically in the range of 120-180°C, and for average low-density polyethylene in the range of 105-115°C. The glass transition temperature of LDPE is about -125°C.

Polyvinyl chloride (PVC) is a polymer produced by polymerization of the monomer vinyl chloride. PVC may have a melting temperature in the range of 100-260°C.

In one embodiment the composite material comprises 10-80% (w/w) (dry weight) of plastic polymers, preferably thermoplastic polymers. In one embodiment the composite material comprises 20-80% (w/w) (dry weight) of plastic polymers, preferably thermoplastic polymers. In one embodiment the total amount of the thermoplastic polymers is in the range of 30-80% (w/w) of the dry weight of the composite, such as 40-80% (w/w), 50-80% (w/w), or 60-80% (w/w). In one embodiment the total amount of the thermoplastic polymers is in the range of 20-70% (w/w) of the dry weight of the composite, or in the range of 20-40% (w/w). In one embodiment the total amount of the thermoplastic polymers is in the range of 10-70% (w/w), 10-60% (w/w) 10-50% (w/w), 10-40% (w/w), or 10-30% (w/w) of the dry weight of the composite. Examples of the total amount of the thermoplastic polymers in the dry weight of the composite include about 10% (w/w), about 20% (w/w), about 30% (w/w), about 40% (w/w), about 50% (w/w), about 60% (w/w), about 70% (w/w) and about 80% (w/w). Said thermoplastic polymers may be originated partly or completely from the sorted plastic fraction.

In one embodiment the composite contains thermoplastic polymer in an amount in the range of 10-70% (w/w) and sorted plastic fraction in the range of 30-90% (w/w). In one embodiment the composite contains thermoplastic polymer in an amount in the range of 20-70% (w/w) and sorted plastic fraction in the range of 30-80% (w/w). In one embodiment the composite contains thermoplastic polymer in an amount in the range of 30-70% (w/w) and sorted plastic fraction in the range of 30-70% (w/w). Said thermoplastic polymers may be different than the thermoplastic polymers originated from the sorted plastic fraction, *i.e.* they are added thermoplastic polymers.

In one embodiment the thermoplastic polymers comprise polyolefines. In one embodiment the total amount of the polyolefines is at least 60% (w/w) or at least 70% (w/w), more preferably at least 75% (w/w) or at least 80% (w/w), and most preferably at least 85% (w/w) or at least 90% (w/w) of the thermoplastic polymers used in the composite. In one embodiment the thermoplastic polymers are polyolefines.

The composite may comprise thermoplastic polymers that are virgin and/or recycled. In one example at least 50% (w/w), or at least 60% (w/w) of the thermoplastic polymers in the composite are recycled. It is also possible to use only recycled thermoplastic polymers. In one example the composite comprises at least one kind of recycled thermoplastic polymer, more preferably the composite comprises at least two kinds of recycled thermoplastic polymers. In an example, the recycled thermoplastic polymer comprises polyethylene (PE) and/or polypropylene (PP) and/or polyethylene terephthalate (PET).

The composite may comprise further filler, such as mineral filler. The mineral filler may comprise kaolin clay, ground calcium carbonate, precipitated calcium carbonate, titanium dioxide, wollastonite, talcum, mica, silica, deinking sludge or a mixture thereof. The composite may further comprise additives, such as colorants, UV stabilizers, coupling agents, foaming agents (blowing agents) and lubricants. In one embodiment the composite contains a colorant or a dye. Colorants or dyes may be used to compensate the dark or even black color of the composite originating from the print inks present in the recycled material. Examples of useful colorants include black and white, which may be used to obtain more acceptable color of the product. However, the colorants are usually not able to hide all the undesired color of the print inks. In one embodiment the composite contains a coupling agent. The content of the coupling agent in the composite product may be in the range of 1-3% (w/w). The coupling agent may comprise, for example, maleic anhydride functionalized HDPE, maleic anhydride functionalize LDPE, maleic anhydride-modified polyethylene (MAHPE), maleic anhydride functionalized EP copolymers, acrylic acid functionalized PP, HDPE, LDPE, LLDPE, and EP copolymers, styrene/maleic anhydride copolymers, vinyl trialkoxy silanes, or combinations thereof.

A polyamide is a macromolecule with repeating units linked by amide bonds. According to the number of repeating units' types, polyamides may be homopolymers or copolymers.

Polyethylene terephthalate (PET) is a thermoplastic polymer resin, which can be used in container for beverage, food and other liquids as a recyclable material. Polyethylene terephthalate glycol modified (PETG) refers to PET wherein cyclohexane dimethanol has been added to the polymer backbone in place of ethylene glycol. PETG is clear amorphous thermoplastic which may be used in several molding applications. Generally PET tolerates high temperatures, having a melting point at about 250-260°C. PET may also be modified with isophthalic acid which replaces some of the 1,4-(para-) linked terephthalate units. This creates an angle in the PET chain, interfering with crystallization and lowering the polymer's melting point.

Polycarbonates are polymers containing carbonate groups (-O-(C=O)-O-). Most polycarbonates of commercial interest are derived from rigid monomers. A balance of useful features including temperature resistance, impact resistance and optical properties position polycarbonates between commodity plastics and engineering plastics. Polycarbonate is a durable material. Although it has high impact-resistance, it has low scratch-resistance and so a hard coating is applied to polycarbonate eyewear lenses and polycarbonate exterior automotive components. The characteristics of polycarbonate are quite like those of polymethyl methacrylate (PMMA, acrylic), but polycarbonate is stronger and usable over a greater temperature range. Polycarbonate may have a melting temperature of about 230-260°C.

Poly(methyl methacrylate) (PMMA) is a transparent thermoplastic often used as a lightweight or shatter-resistant alternative to glass. Although it is not technically a type of glass, the substance has sometimes historically been called acrylic glass. Chemically, it is the synthetic polymer of methyl methacrylate. PMMA has a melting temperature of about 160°C.

Polystyrene (PS) is a synthetic aromatic polymer made from the monomer styrene, a liquid petrochemical. Polystyrene may be rigid or foamed. General purpose polystyrene is clear, hard and brittle. It is a very inexpensive resin per unit weight. polystyrene is in a solid (glassy) state at room temperature but flows if heated above about 100°C, its glass transition temperature. It becomes rigid again when cooled. This temperature behavior is exploited for extrusion, and also for molding and vacuum forming, since it may be cast into molds with fine detail.

The forming of the composite material includes melting the thermoplastic polymer(s) by heating to obtain a melt. The mixture containing the thermoplastic polymer(s) in molten state and other ingredients is then formed into a composite product. The hot product is then cooled or allowed to cool to harden the composite material. Generally the cooling is continued until the temperature of the product, or at least the surface of the product, is in the range of 20-60°C or at the ambient temperature. The cooling may be carried out in one or more steps. In one example there is a first cooling at for example about 150-180°C, and a second cooling at about 60-140°C. More than one cooling temperatures may be used to avoid large temperature variations in the formed product which may adversely affect to the structure of the product. The composite product may be given its final shape at this stage or it may be further processed, e.g. from a sheet or pellet-form by thermoforming methods such as form pressing or molding techniques.

One embodiment provides composite material comprising
- sorted plastic fraction from sorted drum reject material obtained from production of recycled fiber, the sorted plastic fraction comprising
   - 0-30% (w/w) of cellulose-based material, and
   - 20-95% (w/w) of polyolefines, and
- the composite material comprising at least 10% (w/w) of thermoplastic polymer,
wherein the composite contains the sorted plastic fraction in an amount in the range of 5-100% (w/w) of the composite material.

The following examples describe certain advantageous embodiments. The additional polyethylene and/or polypropylene may be virgin or recycled. The additives may be for example lubricants, coupling agents, colorants or other additives, as described herein. The fiber may be from the sorted plastics fraction or it may be additional, or both.

In one example a composite material comprises 20-40% (w/w) of polyethylene and/or polypropylene from the sorted plastics fraction, 0-15% of filler, such as talcum, sludge, CaCO₃ etc., 20-60% (w/w) of fiber, such as recycled fiber or cellulose, and 1-5% (w/w) of additives. In this case there is no additional polyethylene or polypropylene.

In one example a composite material comprises 20-60% (w/w) of polyethylene and/or polypropylene from the sorted plastics fraction, 40-80% (w/w) of fiber, such as recycled fiber or cellulose, and 1-5% (w/w) of additives. In this case there is no additional polyethylene or polypropylene.

In one example a composite material comprises 20-30% (w/w) of polyethylene and/or polypropylene from the sorted plastics fraction, 70-80% (w/w) of filler, such as talcum, sludge, CaCO₃ etc., and 0-5% (w/w) of additives. In this case there is no additional polyethylene or polypropylene or fiber.

In one example a composite material comprises 0-20% (w/w) of additional polyethylene and/or polypropylene, 10-20% (w/w) of polyethylene and/or polypropylene from the sorted plastics fraction, 30-50% (w/w) of filler, such as talcum, sludge, CaCO₃ etc., 10-20% (w/w) of fiber, such as recycled fiber or cellulose, and 1-5% (w/w) of additives.

In one example a composite material comprises 0-20% (w/w) of additional polyethylene and/or polypropylene, 10-20% (w/w) of polyethylene and/or polypropylene from the sorted plastics fraction, 0-15% (w/w) of filler, such as talcum, sludge, CaCO₃ etc., 20-65% (w/w) of fiber, such as recycled fiber or cellulose, and 1-5% (w/w) of additives.

In one example a composite material comprises 0-20% (w/w) of additional (virgin or recycled) polyethylene and/or polypropylene, 10-20% (w/w) of polyethylene and/or polypropylene from the sorted plastics fraction, 40-80% (w/w) of fiber, such as recycled fiber or cellulose, and 1-5% (w/w) of additives.

Also other materials may be added to the mixture which is formed into the composite material and/or composite product. In one example the method for preparing composite material also comprises providing fiber material, such as paper, wood flour, pulp or any other natural fiber material, for example cellulose fiber material, which is not included in the material obtained from the drum reject or the sorted plastics fraction. The composite material may be non-foamed, as explained above, or it may be foamed.

### Foamed composite product

In one embodiment the composite product or composite material is present as foamed. In such case the method comprises comprising foaming the heated mixture (*i.e.* the melt) to form foamed composite material. More particularly one embodiment provides a composite material or product comprising the sorted plastic fraction in foamed form. In general the compositions described for the non-foamed composites above are useful also for foamed composites.

The foaming of plastics saves material and makes the composite lighter but more fragile. Foaming also make possible to manufacture products with high detail *i.e.* with high dimensional accuracy. However, the foaming of composites, such as wood plastic composites is problematic due to low melt strength and uncontrollable bubble forming. Generally the fibers, such as cellulose fibers, disturb the foaming. Therefore the sorted plastic fraction comprising substantially low amount of fiber material is especially suitable for preparing foamed composites.

In one embodiment 5-100% (w/w), as dry weight, of all the thermoplastic polymers in the mixture or in the final foamed composite are from the sorted plastic fraction, for example 50-100% (w/w), 60-100% (w/w), 70-100% (w/w), 80-100% (w/w) or 90-100% (w/w). In one embodiment 100% (w/w) of thermoplastic polymers in the mixture or in the foamed composite are from the sorted plastic fraction.

In one embodiment the foamed composite contains thermoplastic polymer in an amount in the range of 20-80% (w/w). In one embodiment the foamed composite contains thermoplastic polymer in an amount in the range of 30-70% (w/w). In one embodiment the foamed composite contains thermoplastic polymer in an amount in the range of 30-60% (w/w). In one embodiment the foamed composite contains thermoplastic polymer in an amount in the range of 30-45% (w/w). In one embodiment the foamed composite contains thermoplastic polymer in an amount in the range of 40-60% (w/w). In one embodiment the foamed composite contains thermoplastic polymer in an amount in the range of 20-40% (w/w).

In one embodiment the foamed composite comprises about 30% (w/w) of thermoplastic polymers and about 50% (w/w) of fibers. In one embodiment the foamed composite comprises about 40% (w/w) of thermoplastic polymers and about 40% (w/w) of fibers. In one embodiment the foamed composite comprises about 50% of thermoplastic polymers and about 30% (w/w) of fibers. In one embodiment the foamed composite comprises about 60% (w/w) of thermoplastic polymers and about 20% (w/w) of fibers. In one embodiment said the foamed composite about 70% (w/w) of thermoplastic polymers and about 10% (w/w) of fibers. In one embodiment said the foamed composite about 70-80% (w/w) of thermoplastic polymers and no fibers, or the amount of fibers is very low, such as in the range of 0.5-5% (w/w), for example 0.5-2% (w/w).

The amount of fibers in the foamed composite may be in the range of 0-50% (w/w), such as in the range of 0-40% (w/w), 0-30% (w/w), 0-20% (w/w), 0-10% (w/w), 0-5% (w/w), 1-30% (w/w), 1-20% (w/w), 1-10% (w/w), or 1-5% (w/w), for example.

When using foamed thermoplastic polymer lighter products may be obtained while saving in the material costs because less materials are required.

The foaming is generally achieved by using a foaming or blowing agent. A blowing agent is a substance which is capable of producing a cellular structure via a foaming process in a variety of materials that undergo hardening or phase transition, such as polymers, plastics, and metals. They are typically applied when the blown material is in a liquid stage. The cellular structure in a matrix reduces density, increasing thermal and acoustic insulation, while increasing relative stiffness of the original polymer.

Blowing or foaming agents fall into two general classes: physical and chemical. Various gasses and volatile liquids are used as physical blowing agents. Chemical foaming agents (CFAs) may be organic or inorganic compounds that release gasses upon thermal decomposition. CFAs are typically used to obtain medium- to high-density foams, and are often used in conjunction with physical blowing agents to obtain low-density foams. Examples of physical foaming agents include carbon dioxide, nitrogen gas and hydrocarbons, such as pentane, isopentane, and cyclopentane.

Chemical blowing agents include for example isocyanate and water (for PUs), azo, hydrazine and other nitrogen-based materials (for thermoplastic and elastomeric foams), sodium bicarbonate (aka baking soda, used in thermoplastic foams). Here gaseous products and other by-products are formed by a chemical reaction(s), promoted by process or a reacting polymer's exothermic heat. Since the blowing reaction occurs forming low molecular weight compounds acting as the blowing gas, additional exothermic heat is also released.

A chemical blowing agent may be added to the mixture of thermoplastic polymer and the sorted plastic fraction for example before heating the mixture or during the heating.

One embodiment provides a method for manufacturing composite material or product, the method comprising providing an optional thermoplastic polymer and sorted plastic fraction, mixing and foaming the materials and forming the mixture into a composite material or product.

In one embodiment the method comprises forming a mixture comprising at least 10% (w/w) of thermoplastic polymer. The formed mixture may contain thermoplastic polymer(s), fibers and other ingredients in amounts explained above. After mixing the materials the mixture is heated to a desired temperature to melt the thermoplastic polymer and to form a melt which can be foamed and formed into the desired product. After forming the composite product the thermoplastic polymer is allowed to harden or cool to obtain the final product. In general the same materials and process conditions as explained above for regular composites may also be used for preparing foamed composites.

One embodiment provides a method for preparing composite material, the method comprising providing a sorted plastic fraction, forming a mixture comprising at least 10% (w/w) of thermoplastic polymer, foaming the mixture and forming the mixture into a composite material.

In one example the method for manufacturing foamed composite product comprises
- providing sorted plastic fraction and optionally added thermoplastic polymer,
- mixing the materials,
- heating the mixture above the melting temperature of the thermoplastic polymer(s),
- foaming the mixture, and
- forming the mixture into a composite product.

In one example the method for manufacturing foamed composite product comprises
- providing sorted plastic fraction and optionally added thermoplastic polymer,
- mixing the materials,
- heating the mixture to a temperature in the range of 100-360°C, such as 100-220°C, or 100-200°C,
- foaming the mixture, and
- forming the mixture into a composite product.

In one example the method for manufacturing foamed composite product comprises
- providing a thermoplastic polymer having a melting temperature of at least 200°C and sorted plastic fraction,
- mixing the materials,
- heating the mixture to a temperature in the range of 200-360°C,
- foaming the mixture, and
- forming the mixture into a composite product.

### Two-layered composite product

The ink and other impurities in the sorted plastic fraction may affect the appearance of the final composite product. Also the color of the product may fade especially in outdoor use or storage. There may also be variations in the color and the composition of the sorted plastic fraction which may affect to the appearance of the product. Therefore it is possible to apply a covering layer on the colored composite containing sorted plastic fraction, such as a non-transparent covering layer. The covering layer may be a layer of paint or the like, or it may be a layer of different composite material. The covering layer may be called a first layer or an outer layer, and the other layer containing the sorted plastic fraction may be called a second layer, or an inner layer, or an inner composite.

One embodiment provides a composite product, such as natural fiber plastic composite product, comprising a first layer and a second layer, the first layer forming at least a part of the surface of the product, wherein
- the first layer comprises thermoplastic polymer and cellulose based particles, and
- the second layer comprises sorted plastic fraction. Optionally the second layers contains additional thermoplastic polymer. The sorted plastic fraction may further contain colored material as an impurity, or other impurities. The second layer may comprise any of the composite materials described herein comprising sorted plastic fraction, for example foamed or non-foamed composite materials. In general the same materials and process conditions as explained above may also be used for preparing the second layer.

In one embodiment the thermoplastic polymer comprises polyolefin, such as polyethylene or polypropylene. In one embodiment the thermoplastic polymer is polyolefin.

In one embodiment the second layer is a composite wherein the thermoplastic polymer is present as foamed. More particularly in one embodiment the second layer, or the composite material of the second layer, is present as foamed. In such case the product will be lighter and the first layer protects the foamed second layer thus providing mechanical strength and durability. The obtained products are suitable for example for outdoor use, or to any other use wherein it is desired to protect the inner layer.

The first layer forms at least a part of the surface of the product. In other words, the first layer covers the second layer at least partly. The amount of impurities, such as the ink, is preferably higher in the second layer of the product than in the first layer of the composite product. The first layer may cover at least one side of the second layer, for example one, two, three or four sides.

As the first layer covers at least partially the second layer, or an inner layer, the second layer may comprise large amount of the sorted plastic fraction. Because of the ink possibly present in the recycled material the color of the second layer may be dark. It is usually desired that the outer surface of such a composite product has a light color so the second layer is covered with the first layer made of materials having more acceptable appearance.

Generally the method for manufacturing composite product comprises
- forming a first layer of the product, the first layer comprising thermoplastic polymer material and cellulose based particles, the first layer forming at least a part of the surface of the product, and
- forming a second layer of the product, the second layer comprising sorted plastic fraction.

One embodiment provides a method for manufacturing a composite product, the method comprising
- forming a first layer of the product from a mixture comprising thermoplastic polymer material and cellulose based particles, the first layer forming at least a part of the surface of the product, and
- forming a second layer of the product from a mixture comprising sorted plastic fraction and optionally thermoplastic polymer and/or fiber material.

One embodiment comprises foaming the mixture forming the second layer before forming the mixture into the second layer. In such case the second layer may be prepared by
- providing sorted plastic fraction and optionally thermoplastic polymer and/or fiber material,
- mixing the materials,
- heating the mixture above the melting temperature of the thermoplastic polymer(s),
- foaming the mixture, and
- forming the mixture into a composite product.

In one example the second layer is prepared by
- providing sorted plastic fraction, and optionally any further ingredients
- forming a mixture comprising at least 10% (w/w) of thermoplastic polymer,
- heating the mixture above the melting temperature of the thermoplastic polymer,
- foaming the mixture, and
- forming the mixture into a composite product.

In general the first layer is prepared by providing a thermoplastic polymer and cellulose based particles, mixing the materials, heating the mixture above the melting temperature of the thermoplastic polymer and forming the mixture into a composite product.

The first layer and/or the second layer may be formed in a lamination process, a gluing process, a molding process, an extrusion process, or a welding process.

Extrusion is a process used to create objects of a fixed cross-sectional profile. A material is pushed or drawn through a die of the desired cross-section. The two main advantages of this process over other manufacturing processes are its ability to create very complex cross-sections, and to work materials that are brittle, because the material only encounters compressive and shear stresses. It also forms parts with an excellent surface finish. In an extrusion process the thermoplastic polymer and the filler and/or reinforcement material are mixed and fed to an extruder, wherein the materials are heated to a desired temperature and pushed through a die to obtain an extrudate. Extrusion may be continuous (theoretically producing indefinitely long material) or semi-continuous (producing many pieces). One example of the extrusion process is extrusion molding.

Co-extrusion is a process of extruding two or more materials through a single die with two or more orifices arranged so that the extrudates merge and weld together into a laminar structure before chilling. Each material is fed to the die from a separate extruder, but the orifices may be arranged so that each extruder supplies two or more plies of the same material. The advantage of coextrusion is that each ply of the laminate imparts a desired characteristic property, such as stiffness, heat-sealability, impermeability or resistance to some environment, all of which properties would be impossible to attain with any single material.

In one embodiment the first layer and the second layer are formed by a coextrusion process. This process is an effective way to manufacture a product comprising two layers with different raw materials. For example, the flow properties of raw materials may be separately controlled during the co-extrusion process. By using co-extrusion the properties of the "weaker" second layer, such as a foamed layer, may be compensated. The co-extruded non-foamed first layer provides strength to a product having a foamed second layer because of its higher impact strength and lower amount of impurities. The second layer containing sorted plastic fraction may be effectively attached to the first outer layer with coextrusion. This is surprising as the second layer lacks lignin or other substances which might help the attachment of the two layers together. This provides an effect of enabling manufacturing various products having prolonged durability and which tolerate mechanical stress. Such products may be for example used outdoors and as floor elements or the like. The co-extrusion may be used especially for polyolefines, such as polyethylene or polypropylene, which may not be attached properly by laminating or by using an adhesive or adhesive tape.

In one example, the first layer and the second layer are first formed separately, for example in an injection molding process or in an extrusion process, after which the layers are attached to each other, for example, in a lamination process.

In one example one of the dimensions of the composite product is at least 10 times greater than two other dimensions of the product.

In one embodiment the natural fiber plastic composite product is a building element, such as a decking board or a façade panel, or a landscaping element. Examples of the composite product include a railing, a fence, or a noise barrier. The natural fiber plastic composite product may also be a product that is used to cover the surface of another product, such as a cover strip.

The following reference numbers are used in the figures:
- 11: natural fiber plastic composite product, also called composite product,
- 12: first layer of the natural fiber plastic composite product,
- 12a: thickness of the first layer,
- 13: second layer of the natural fiber plastic composite product,
- 13a: thickness of the second layer,
- 14: hole in the natural fiber plastic composite product,
- 21: fastener,
- 21b: head of the fastener,
- 22: fastening member,
- 23: base element,
- 31: raw materials for the natural fiber plastic composite product, and
- 32: apparatus adapted to form the natural fiber

The term "first layer" 12 of the natural fiber plastic composite product 11 refers to a layer that forms at least a part of the surface area of the composite product 11. Preferably the first layer 12 is at least partly visible when the product 11 is in use.

For example, in the case of a building element, the first layer 12 preferably forms the surface of a side that is visible in use. In the case of a decking board that forms a part of a floor, the first layer 12 preferably covers at least the top side of said decking board.

The term "second layer" 13 of the natural fiber plastic composite product 11 refers to a layer that is at least partly covered by the first layer 12. In other words, the term "second layer" 13 of the natural fiber plastic composite product refers to a layer that is at least partly "underneath" the first layer 12. The second layer 13 may also be an inner layer. Preferably, the second layer 13 is not visible when the product 11 is in use. However, in an example, the second layer is partly visible when the product 11 is in use.

The natural fiber plastic composite product 11 may comprise two layers. It may also comprise more than two layers, for example, three, four, five, six, seven, eight, or even more than eight layers. In some examples the product 11 comprises two, three or four layers. In an example, there is at least one adhesive layer between the first layer and the second layer.

The term "cellulose based particles" refers to cellulose particles that may originate from any plant material that contains cellulose. The particles may be in the form of dust (powder); preferably they are, at least partly, in the form of fibers. In this application, the particles having a length of at least 0.1 mm, more preferably at least 0.2 mm are called fiber particles or fibers, and smaller particles than those mentioned above are called powder-particles or powder.

The natural fiber plastic composite may be, for example, a wood plastic composite, i.e. the cellulose based particles originate from wood. In an example, at least 30% (w/w), more preferably at least 80% (w/w) and most preferably at least 90% (w/w) of the cellulose based particles of the first layer are wood based particles. The wood material may be softwood trees, such as spruce, pine, fir, larch, douglas-fir or hemlock, or hardwood trees, such as birch, aspen, poplar, alder, eucalyptus, or acacia, or a mixture of softwoods and hardwoods. Non-wood material may be agricultural residues, grasses or other plant substances such as straw, leaves, bark, seeds, hulls, flowers, vegetables or fruits from cotton, corn, wheat, oat, rye, barley, rice, flax, hemp, manila hemp, sisal hemp, jute, ramie, kenaf, bagasse, bamboo, or reed. The cellulose based particles may be virgin or recycled, or both.

In one example the cellulose based particles in the first layer 12 of the product 11 comprise cellulose based particles that have low lignin content. Advantageously, the cellulose based particles comprises chemically treated cellulose particles (i.e. so called lignin free cellulose particles). Alternatively or in addition, the cellulose based particles originate from plant material(s) in which the lignin content of the particles is naturally low.

The amount of the recycled raw materials as well as other raw materials of uneven quality and/or colored raw materials may need to be increased in the composite product 11 due to environmental reasons and/or efficiency reasons. However, it has been observed that the amount of defects on the surface of the manufactured product 11 may increase with an addition of said raw materials and, therefore, the appearance and/or strength properties of the surface of the composite product 11 may decrease. Now, due to the novel composite product 11 comprising a first layer that covers at least a part of the surface of the product 11, it is possible to use a greater amount of recycled material and/or colored material and/or material of uneven quality as raw material for the composite product 11 than in conventional products. Thus, the product 11 may be more environmentally friendly and/or more economical than conventional products.

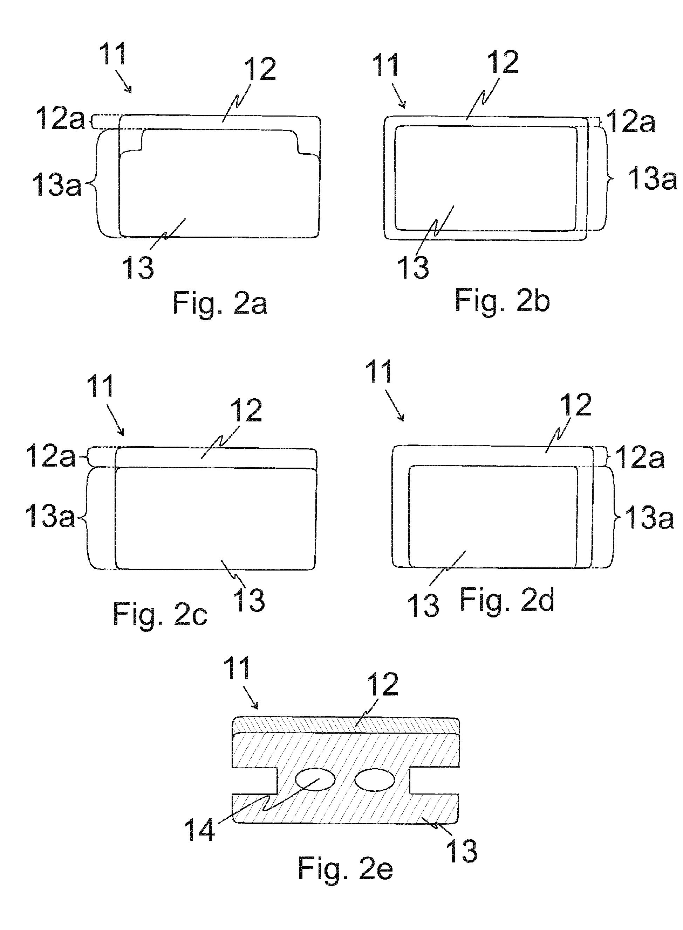

Figures 2a to 2e show some examples of the product 11 comprising the first layer 12 and the second layer 13. In Figures 2a to 2e, among other things, the thickness 12a of the first layer 12 and the thickness 13a of the second layer are illustrated. Figure 2e shows an example of a composite product 11 having holes 14.

The first layer 12 may form the entire surface area of the product 11. In this case, the first layer 12 covers the second layer 14 totally. Alternatively, only a part of the second layer 13 may be covered by the first layer 12.

Figures 2a and 2c show examples in which the first layer 12 covers one surface of the composite product 11. Figure 2b shows an example in which the first layer 12 covers at least four surfaces of the composite product 11 at least partly, preferably the whole surface area of the composite product 11. Figure 2d shows an example in which the first layer 12 covers at least three of the surfaces at least partly. Figure 2e shows an example of the end side of a building panel. The building panel shown in Figure 2e comprises two holes 14, but the number of the holes may vary. Preferably, the composite product comprises one, two, three, four, five or six holes 14. In another example, the composite product does not comprise any holes 14. Thus, the product 11 may be formed as a solid or hollow profile. The weight of the composite product 11 typically decreases due to the holes 14.

In one example the first layer 12 of the composite product forms at least 50% or at least 60%, more preferably at least 70% or at least 80%, and most preferably at least 90% or at least 95% of the surface area of the composite product. Most advantageously, the first layer 12 of the composite product forms at least 60% or at least 70%, more preferably at least 80% or at least 90% and most preferably at least 95% or at least 99% of the surface area of the product 11 that is visible in use.

The thickness 12a of the first layer 12 of the composite product 11 is preferably at least 0.2 mm or at least 0.3 mm, more preferably at least 0.4 mm or at least 0.5 mm, and most preferably at least 0.6 mm or at least 0.7 mm. In addition, the thickness 12a of the first layer 12 of the composite product 11 is preferably not greater than 5 or 4 mm, more preferably not greater than 3 or 2.5 mm, and most preferably not greater than 2.0 or 1.5 mm. In an example, the thickness 12a of the first layer 12 is between 0.2 and 5 mm. The thickness 12a of the first layer 12 of the composite product 11 is preferably determined as the median thickness of the first layer. If the product 11 comprises a side that is visible when the product 11 is in use, the thickness 12a of the first layer 12 is preferably determined as the median thickness of that side of the product 11.

The thickness 13a of the second layer is preferably between 0.5 and 40 mm, more preferably between 1 and 20 mm, and most preferably between 3 and 10 mm. The thickness 13a of the second layer 13 is preferably calculated as the median thickness of the second layer.

In one example the length of the product is at least 10 times, more preferably 50 or 100 times, and most preferably 200 times greater than the thickness of the product. Alternatively or in addition, the width of the product is at least 2 times, more preferably at least 3 times, and most preferably at least 5 times greater than the thickness of the product.

The first layer of the composite product comprises cellulose based particles. Due to the cellulose based particles, the properties of the first layer may be improved. In one example the amount of the cellulose particles in the first layer of the product is in the range of 5-80% (w/w), or in the range of 10-70% (w/w), more preferably in the range of 15-60% (w/w) or in the range of 20-50% (w/w), and most preferably in the range of 30-40% (w/w). The cellulose particles preferably comprise wood dust and/or mechanical pulp and/or chemical pulp, from which the chemical pulp in powder form or fiber form is preferably used, and chemical pulp in the form of fibers is most preferably used. In one example at least 60% (w/w), preferably at least 70% (w/w) or at least 80% (w/w), and most preferably at least 90% (w/w) or at least 95% (w/w) of the cellulose based particles in the first layer of the product are particles having a low lignin content, *i.e.* chemically treated cellulose particles and/or plant material in which the lignin content of the fibers is naturally low. In one example the amount of the lignin in the first layer of the product calculated from the total amount of the cellulose based particles in the first layer is lower than 15% (w/w) or lower than 10% (w/w), more preferably lower than 5% (w/w) or lower than 3% (w/w), and most preferably lower than 2% (w/w) or lower than 1% (w/w).

Preferably the first layer of the natural fiber plastic composite product comprises thermoplastic polymer. The total amount of the thermoplastic polymer(s) may be in the range of 20-80% (w/w), such as in the range of 20-60% (w/w) of the first layer. The first layer may comprise thermoplastic polymers that are virgin and/or recycled. Advantageously, the first layer comprises virgin thermoplastic polymer(s). Examples of thermoplastic polyolefines include polyethylene, polypropylene, polymethylpentene, and polybutene-1.

In one embodiment the thermoplastic polymer comprises or consists of polyolefin, i.e. polypropylene (PP) and/or polyethylene (PE). If polyolefin is used, a low temperature may be used in the manufacturing process of the composite product and therefore darkening of the cellulose based particles may be avoided. Advantageously, at least 60% (w/w) or at least 70% (w/w), more preferably at least 75% (w/w) or at least 80% (w/w) and most preferably at least 85% (w/w) or at least 90% (w/w) of the thermoplastic polymers used in the first layer are polyolefines.

In an example, the thermoplastic polymer comprises polylactide (PLA). In this case, the total amount of the polylactides may be at least 30% (w/w) or at least 40% (w/w), for example at least 50% (w/w) or at least 60% (w/w) or at least 70% (w/w) or at least 80% (w/w) of the thermoplastic polymers in the first layer.

In an example, the first layer and/or the second layer of the product comprises polyvinyl chloride (PVC). In this case, the total amount of the PVCs in said layer is advantageously at least 10% (w/w), such as at least 30% (w/w), for example at least 50% (w/w) of plastic polymers in said layer.

The first layer may comprise mineral fillers. The mineral filler preferably comprises kaolin clay, wollastonite, ground calcium carbonate, precipitated calcium carbonate, titanium dioxide, talcum, mica, silica or a mixture consisting two, three, four, five or six of said mineral fillers. Most preferably, the mineral filler in the first layer comprises or consists of talcum.

In one example the first layer comprises 20-80% (w/w) thermoplastic polymers, 5-80% (w/w) cellulose based particles, and 0-20% (w/w) mineral fillers, the total content of said materials forming at least 90% (w/w), such as at least 95% (w/w), for example at least 97% (w/w) of the first layer. In addition, the first layer may comprise, for example, additives, such as colorants, UV stabilizers, coupling agents, foaming agents (blowing agents) and/or lubricants.

At least in the case of polyolefin, the composite product may comprise coupling agent(s). The coupling agent may comprise, for example, maleic anhydride functionalized HDPE, maleic anhydride functionalize LDPE, maleic anhydride-modified polyethylene (MAHPE), maleic anhydride functionalized EP copolymers, acrylic acid functionalized PP, HDPE, LDPE, LLDPE, and EP copolymers, styrene/maleic anhydride copolymers, vinyl trialkoxy silanes, or combinations thereof.

The second layer that is at least partly covered by the first layer may comprise further recycled material(s) comprising different colors. Due to the first layer, the composite product may be weatherproof, it may have good strength properties, and there may not be any defects on the surface of the product; even the raw materials of the second layer may vary from time to time.

The first layer may comprise less than 5% (w/w) or less than 3% (w/w), more preferably less than 2% (w/w) or less than 1% (w/w) and most preferably less than 0.5% (w/w) of impurities. In some examples the first layer comprises less than 5% (w/w) or less than 3% (w/w), more preferably less than 2% (w/w) or less than 1% (w/w) and most preferably less than 0.5% (w/w) of materials, such as lignin, print ink, silicone and/or adhesives, or combinations thereof. In one embodiment the first layer comprises less than 5% (w/w) or less than 3% (w/w), more preferably less than 2% (w/w) or less than 1% (w/w) and most preferably less than 0.5% (w/w) of print ink. In one embodiment the first layer does not contain any print ink. In some examples the first layer comprises less than 5% (w/w) or less than 3% (w/w), more preferably less than 2% (w/w) or less than 1% (w/w) and most preferably less than 0.5% (w/w) of lignin.

Due to the small amount of the impurities in the first layer, and the thermoplastic polymer and the cellulose particles therein, the surface of the product may have good strength properties together with a good appearance even if the product comprises a significant amount of impurities in the second layer of the product.

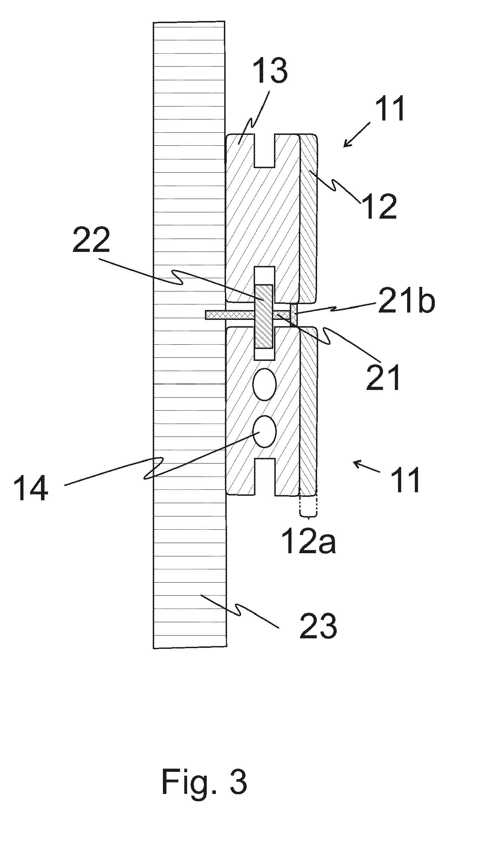

Figure 3 shows an example of an arrangement. In figure 3 the composite product 11, the first layer 12, a thickness 12a of the first layer, the second layer 13, a hole 14 of the product 11, a fastener 21, a head 21 b of the fastener, a fastening member 22, and a base element 23 are shown.

Preferably, the composite product 11 has a structure that is compatible with the fastening member 22 in order to achieve good fastening of the composite product 11 to the base element 23. There may be some thermal expansion in the composite product 11 in use that needs to be taken into account.

According to an embodiment, the composite product is a decking board or a façade panel and the structure of the composite product 11 is such that a fastening member 22, preferably a so called T-clip manufactured by UPM Corporation, may be used with the composite product 11. The fastening member 22 may be used in order to fasten the manufactured composite product, preferably together with a fastener 21, such as a screw or a nail. The fastener 21 may also be used without the fastening member 22. In an example, the composite product comprises elongated holes that are used for the fasteners 21, for example a screw or a nail. Due to the elongated holes, thermal expansion of the composite product is allowed. In another example, the fastening of implemented by so called support rail fastening member, such as an alu rail fastening member.

The product 11 may be installed in such a way that the first layer 12 forms the surface of the product 11 that is visible. In an example the natural fiber plastic composite product 11 is fastened in order to form a part of the building. In an example, the natural fiber plastic composite is fastened in order to form a part of the terrace.

In an example, the fastener 21 comprises a head 21 b. In this case, the fastener may be, for example, a screw or a nail, preferably the screw. Advantageously the head 21 b of the screw 21 is parallel with the surface of the product 11 as is shown in Figure 3. Advantageously, the fastener 21 is used together with a fastening member 22 to fasten the composite product 11 to the base element 23. The fastening member may have, for example, a T-profile.

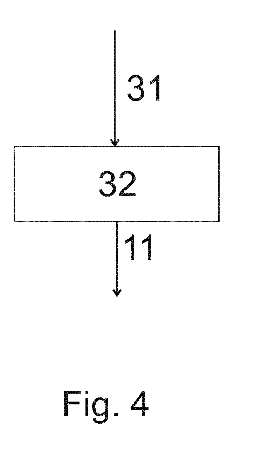

Figure 4 shows an exemplary embodiment in a reduced schematic chart. Figure 4 shows raw material 31 for the natural fiber plastic composite product 11, an apparatus 32 adapted to form the natural fiber plastic composite product 11, and a natural fiber plastic composite product 11.

The system according to the present invention preferably comprises at least one supplying device to feed the raw materials 31 to the apparatus 32, which apparatus 32 forms the natural fiber plastic composite product 11. The apparatus may contain means for mixing the raw materials 31. The apparatus contains means for heating the raw materials to a desired temperature, and preferably means for monitoring, controlling and maintaining the desired temperature. In one embodiment the apparatus contains means for mixing and means for heating the material. In one example the apparatus 32 is an extruder. In one example the apparatus 32 is a co-extruder. In one example the apparatus 32 is an injection molding apparatus.

The first layer and the second layer are preferably formed by an extrusion process using an extruder. In one embodiment the first layer and the second layer are formed by a co-extrusion process. In these cases, the manufacturing apparatus 32 comprises an extruder, such as a hot extruder. The extruder may comprise at least one extrusion screw. In one example the extruder is a twin-screw extruder. In one example the extruder is a tandem extruder, for example wherein the material is melted in a first device, transferred to a second device wherein gas is injected to the material.

In a general example raw compound material in the form of nurdles (small beads, often called resin in the industry) or granules is gravity fed from a top mounted hopper into the barrel of the extruder. Additives (in either liquid or pellet form) are often used and can be mixed into the resin prior to arriving at the hopper. The material enters through the feed throat (an opening near the rear of the barrel) and comes into contact with the screw. The rotating screw (for example turning at up to 120 rpm) forces the plastic beads forward into the heated barrel. The desired extrusion temperature is rarely equal to the set temperature of the barrel due to viscous heating and other effects. In most processes, a heating profile is set for the barrel in which three or more independent PID controlled heater zones gradually increase the temperature of the barrel from the rear (where the plastic enters) to the front. This allows the plastic beads to melt gradually as they are pushed through the barrel and lowers the risk of overheating which may cause degradation in the polymer. Extra heat is contributed by the intense pressure and friction taking place inside the barrel.

After passing through the barrel the molten mixture enters the die. The die is what gives the final product its profile and is designed so that the molten plastic evenly flows from a cylindrical profile, to the product's profile shape. Finally the product is passed through a calibration unit that controls the cross-sectional profiles. During the calibration the material is processed into a desired shape by using vacuum. The properties of the composite material, such as a good melt strength, will facilitate the calibration and enable the production of products with high quality.

After this the product is cooled. This may be achieved by pulling the extrudate through a water bath. However, plastics are very good thermal insulators and are therefore difficult to cool quickly.

In an example, the product is manufactured in a molding process, such as in an injection molding process, or in a lamination process, in a gluing process, in a molding process, or in a welding process.

In an example, the layers are first formed separately, for example in a molding process or in an extrusion process, after which the formed layers are attached to each other, for example, in a lamination process. In other words, the first layer and the second layer may be laminated with each other in order to form the product. In this case, the manufacturing apparatus 32 comprises a laminating device.

The composite products described herein may be used in various applications. The "composite product" includes also the products containing foamed polymer, and the products comprising a first layer and a second layer. In one example the composite product is a building element, such as a decking board or a façade panel. In the case of the decking board or the façade panel, the product may comprise holes, or the product may be a so called solid profile without any holes. In one embodiment the product is a railing or a fence. In one embodiment the product is a cover strip. In one embodiment the product is a noise barrier. In one embodiment the product is a pole. In one embodiment the product is a frame, such as a frame for shelves or cabinets, such as kitchen cupboard or furniture, or a kitchen-sanitary building block module or the like. In one embodiment the product is a furniture or a part of a furniture.

The final product may be a product having a small wall thickness, such as less than 5 mm, or less than 3 mm or about 1 mm.

In one embodiment the product is a board or panel, such as a building board or panel, wall board or panel, floor board or panel, ceiling board or panel and the like.

On embodiment provides a building comprising said composite product, wherein the natural fiber plastic composite is fastened by the fastener in order to form a part of the building.

On embodiment provides a terrace comprising said composite product, wherein the natural fiber plastic composite is fastened by the fastener in order to form a part of the terrace.

On embodiment provides an arrangement comprising said composite product, a fastening member, and a base element, wherein the composite product is fastened to the base element by the fastening member and the fastener, wherein the fastener comprises a head, and the head is parallel with a surface of the product.

One embodiment provides use of a composite product comprising a thermoplastic polymer and sorted plastic fraction in the above-mentioned products, such as in a building element, in a railing or a fence, in a cover strip, in a pole, in a frame, such as a frame for shelves, or in a furniture or a part of a furniture. The "composite product" includes also the products containing foamed polymer or composite, and the products comprising a first layer and a second layer, and combinations thereof, as described herein. Preferably the composite product is natural fiber composite product.

### Examples

Non-pressed drum rejects were processed according to the following sorting process:
1. Mechanical pre-screening with a drum screen to remove the fine fraction (quite a lot of fibrous material is removed here and thus also water).
2. NIR-based sorting of the pre-screened drum rejects

In the trials, first all the polyethylene was sorted out from the pre-screened drum rejects and then the separated polyethylene fraction was cleaned by running it again through the sorting system as explained in example 1 below.

### Example 1

11 860 kg of non-pressed drum rejects in approximately 50% moisture content were first screened to remove particles smaller than 35 mm. Polyethylene was separated from the pre-screened drum rejects with an NIR based sorting technology in two stages. At the first stage, all the polyethylene was sorted out from the pre-screened drum rejects and 1250 kg of polyethylene was obtained. At the second stage, the separated PE fraction was cleaned by running it again through the sorting system in order to remove the impurities and 760 kg of cleaned polyethylene in 21.7% moisture content was obtained. The polyethylene was tested in composite production.

### Example 2

142.9 kg of non-pressed drum rejects in approximately 55% moisture content were first screened to remove particles smaller than 24 mm. The pre-screened drum rejects were then separated to 2-dimensional and 3-dimensional fractions with a ballistic separator. The plastics were sorted out from these fractions with an NIR based sorting technology. From this sorting, 27 kg of polyethylene was obtained, out of which 1.1 kg were 3-dimensional fraction. The obtained amount of polypropylene was 9.1 kg, out of which 3.6 kg represents the 3-dimensional fraction. The plastic fractions were in approximately 20% moisture content.

## Claims

1. A method for preparing composite material, the method comprising
- providing a sorted plastic fraction from drum reject material obtained from production of recycled fiber, the sorted plastic fraction comprising as dry weight
-0-30% (w/w) of cellulose-based material, and
-20-95% (w/w) of polyolefines,
- optionally providing additional thermoplastic polymers and/or fibers,
- forming a mixture comprising at least 10% (w/w) of thermoplastic polymer,
- heating the mixture above the melting temperature of the thermoplastic polymer and
- forming the heated mixture into composite material.

2. The method of claim 1, wherein 5-100% (w/w) of all the thermoplastic polymers in the mixture or in the final composite material is from the sorted plastic fraction, such as 10-90% (w/w), or 50-100% (w/w).

3. The method of claim 1, wherein 100% (w/w) of all the thermoplastic polymers in the mixture or in the final composite material is from the sorted plastic fraction.

4. The method of any of the preceding claims, wherein the chlorine content of the sorted plastics fraction is less than 1% (w/w), such as less than 0.5% (w/w), or less than 0.2% (w/w), or 0%.

5. The method of any of the preceding claims, wherein the recycled fiber comprises recovered paper or board comprising collected paper and/or cardboard waste.

6. The method of any of the preceding claims, wherein the provided sorted plastic fraction is in a refined form having an average particle size in the range of 5-20 mm.

7. The method of any of the preceding claims, wherein the provided sorted plastic fraction is in a form of granules.

8. The method of any of the preceding claims, wherein the thermoplastic polymer comprises polyethylene and/or polypropylene.

9. The method of any of the preceding claims, wherein the thermoplastic polymer comprises a thermoplastic polymer selected from polystyrene, polyamide, polytetrafluoride, polyethylene terephthalate and polycarbonate.

10. The method of any of the preceding claims, wherein the formed mixture comprises at least 20% (w/w) of thermoplastic polymers and at least 10% (w/w) of fibers, such as 20-80% (w/w) of thermoplastic polymers and 10-80% (w/w) of fibers, or 20-40% (w/w) of thermoplastic polymers and 10-80% (w/w) of fibers.

11. The method of any of the preceding claims, comprising foaming the heated mixture to form foamed composite material.

12. Use of a sorted plastic fraction from drum reject material obtained from production of recycled fiber, in the manufacture of composite material, the sorted plastic fraction comprising as dry weight
-0-30% (w/w) of cellulose-based material, and
-20-95% (w/w) of polyolefines.

13. A composite product containing the composite material obtained with the method of any of the claims 1-11.

14. A composite product comprising a first layer and a second layer, the first layer forming at least a part of the surface of the product, wherein
- the first layer comprises thermoplastic polymer and cellulose based particles, and
- the second layer comprises the composite product of claim 13.

15. The composite product of any of the claims 13-14, wherein the composite product is selected from a building element, such as a decking board or a façade panel, a railing or a fence, a cover strip, a noise barrier, a pole, a frame, such as a frame for shelves, board or panel, or a furniture or a part of a furniture.
